# EUROPEAN PATENT APPLICATION

(11) **EP 4 092 548 A1**
(43) Date of publication of application: **23.11.2022**
(21) Application number: 21174293.7
(22) Date of filing: 18.05.2021
(51) Int. Cl.: G06F 21/31, G06F 21/40, G06F 21/64, H04L 9/32, H04L 29/06

(54) **AUTHORISING ACCESS TO A DEVICE**

(71) Applicant: Siemens Aktiengesellschaft, 80333 München (DE)
(72) Inventor: Singh, Saurabh Narayan, 81739 München (DE)

(57) **Abstract**

The invention relates to a computer-implemented method and apparatus for authorising access to a device, e.g., a digital wallet, wherein the device is connected to a distributed database system, e.g., a blockchain. The method comprises the steps:
a) setting (S1) first output data and related first input data for accessing the device,
b) retrieving (S2) cryptographic public keys from a predefined number of nodes of the distributed database system,
c) encrypting (S3) the first input data using the cryptographic public keys,
d) receiving (S4) an access request for accessing the device by a user or an application,
e) receiving (S5) second input data from the user or the application depending on the first output data as a result of the access request,
f) checking (S6) the second input data against the first input data by the nodes, wherein the first input data are decrypted using respective cryptographic private keys of the respective nodes,
and
g) authorising (S7a, S7b) access to the device for the user or the application depending on the check results.

It is an advantage of this invention that access to a wallet can be recovered.

## Description

The present invention relates to a computer-implemented method and an apparatus for authorising access to a device, e.g., a digital wallet/ a wallet for cryptocurrencies, wherein the device is connected to a distributed database system, e.g., a blockchain.

Digital and cryptocurrency wallets and identities in decentralized solutions are differently managed compared to classical centralized systems. The control of the identity as well as autonomy and responsibility lie with the identity holder. Identities are not stored at a central server like an Identity and Access management secure storage, but are stored on the device of the owner, and controlled from there. This provides higher control of the identity. The identity owner can decide to share full or parts of the identity for example needed for a particular operation, e.g., signing a transaction. All this is facilitated by client-side wallets. Digital wallets store the public-private-key pairs of the owner as well as associated assets. Such wallets are popular in context of crypto currencies and public blockchain solutions, as well as for enterprise use cases. In a public blockchain or crypto currency, wallets store the identity of the owner and assets owned by the specific public-private key pair are completely decentralized and needs to be recovered by the owner of the wallet. In other use cases, wallets can be less decentralized with a central server storing a collection of public-private key pairs associated with identities, and a user can access them with a classical identity and access management system, for example, username and password.

Two categories of wallets exist: custodial and non-custodial wallets. Custodial wallets store the public-private-key pair at a secure server and the user can access them via secure state of the art identity management systems. This is equivalent to a centralized solution. In this case an identity recovery is simple: The custodian can reset the password based on standard practices. However, such solution is not decentralized, and control over the wallet rests in the hand of a central authority. Non-custodial wallets store the identity at the owner's device and the owner can store or note the password in a secure location (e.g., USB stick/virtual machine/piece of paper). These non-custodial wallets usually provide a pass phrase which can be used for wallet recovery. This pass phrase contains a combination of random words which need to be memorized and entered when recovery is wished. However, if the user forgets the passphrase, there is no way to recover the wallet anymore.

In a decentralized wallet ecosystem, a user is hence completely responsible for the identity, e.g., a transaction is signed by the user at the origin. However, this also means that forgetting the password to the wallet, there is no convenient recovery mechanism.

There are multiple instances of popular Bitcoin and Ethereum wallets, which store large amounts of cryptocurrencies, but are not accessible anymore. This means that the cryptocurrency is locked forever in the wallet and cannot be recovered ever. This can lead to huge losses in case of public block-chains. In case of enterprise use cases, this could lead to loss of access to confidential data, as well as revoked access rights for important applications.

It is therefore an objective of the present invention to provide a mechanism to control or recover access to a device, e.g., a digital wallet, to for example avoid future (data) losses and enabling control over identities.

The object is solved by the features of the independent claims. The dependent claims contain further developments of the invention.

The invention provides according to the first aspect a computer-implemented method for authorising access to a device, wherein the device is connected to a distributed database system, the method comprising the steps:
a) setting first output data and related first input data for accessing the device,
b) retrieving cryptographic public keys from a predefined number of nodes of the distributed database system,
c) encrypting the first input data using the cryptographic public keys,
d) receiving an access request for accessing the device by a user or an application,
e) receiving second input data from the user or the application as a result of the access request, wherein the second input data depend on the first output data,
f) checking the second input data against the first input data by the nodes, wherein the first input data are decrypted using respective cryptographic private keys of the respective nodes,
   and
g) authorising access to the device for the user or the application depending on the check results.

The invention provides according to the second aspect an apparatus for authorising access to a device, wherein the device is connected to a distributed database system, the apparatus comprising:
- a data module which is configured to set first output data and related first input data for accessing the device,
- a first interface which is configured to retrieve cryptographic public keys from a predefined number of nodes of the distributed database system,
- an encryption module which is configured to encrypt the first input data using the cryptographic public keys,
- a second interface which is configured to receive an access request for accessing the device by a user or an application,
- a third interface which is configured to receive second input data from the user or the application as a result of the access request, wherein the second input data depend on the first output data,
   and
- an authorising module which is configured to authorise access to the device for the user or for the application depending on check results, wherein the check results are provided by the nodes checking the second input data against the first input data, wherein the first input data are decrypted using respective cryptographic private keys of the respective nodes.

The apparatus can be for example part of the device. In other words, the device can for example comprise the apparatus. The apparatus can be implemented at least partly in hardware and/or software.

The device can be for example a digital wallet, also referred to as wallet or e-wallet. The digital wallet can be in particular a cryptocurrency wallet. A digital wallet can be an electronic device, a hardware wallet, an online service or a software program installed on a hardware device. The device can be configured to store user credentials, e.g., a public and private key pair. These user credentials can be used to sign transactions with another party of a distributed database system, e.g., a blockchain or distributed ledger, to exchange cryptocurrency/digital units and/or data. To this end, the device can be coupled with the distributed database system.

Unless indicated otherwise in the description below, the terms "perform", "calculate", "computer-aided", "compute", "discover", "generate", "configure", "reconstruct" and the like preferably relate to actions and/or processes and/or processing steps that alter and/or produce data and/or that convert data into other data, the data being able to be presented or available as physical variables, in particular, for example as electrical impulses. In particular, the expression "computer" should be interpreted as broadly as possible in order to cover in particular all electronic devices having data processing properties.

Computers can therefore be for example personal computers, servers, programmable logic controllers (PLCs), handheld computer systems, Pocket PC devices, mobile radios and other communication devices that can process data in computer-aided fashion, processors and other electronic devices for data processing.

Within the context of embodiments of the invention, "computer-implemented" can be understood to mean for example an implementation of the method in which in particular a processor carries out at least one method step of the method. Within the context of embodiments of the invention, a processor can be understood to mean for example a machine or an electronic circuit. A processor can be in particular a central processing unit (CPU), a microprocessor or a microcontroller, for example an application-specific integrated circuit or a digital signal processor, possibly in combination with a memory unit for storing program instructions, etc. A processor can, by way of example, also be an IC (integrated circuit), in particular an FPGA (field programmable gate array) or an ASIC (application-specific integrated circuit), or a DSP (digital signal processor) or a graphics processor GPU (graphics processing unit). A processor can also be understood to mean a virtualized processor, a virtual machine or a soft CPU. It can, by way of example, also be a programmable processor that is equipped with configuration steps for carrying out the method according to embodiments of the invention or that is configured by means of configuration steps such that the programmable processor realizes the features according to embodiments of the invention for the method, the component, the modules or other aspects and/or sub-aspects of embodiments of the invention.

Within the context of embodiments of the invention, a "module" can be understood to mean for example a processor and/or a memory unit for storing program instructions. By way of example, the processor is configured specifically to execute the program instructions such that the processor performs functions to implement or perform the method according to embodiments of the invention or a step of the method according to embodiments of the invention. A module can, by way of example, also be a node of the distributed database system that for example performs/realizes the specific functions/features of an applicable module.

Within the context of embodiments of the invention, "comprise", in particular in regard to data and/or information, can be understood to mean for example (computer-aided) storage of applicable information or of an applicable datum in a data structure/data record (which e.g., is in turn stored in a memory unit).

Within the context of embodiments of the invention, "assign", in particular in regard to data and/or information, can be understood to mean for example computer-aided assignment of data and/or information. By way of example, a second datum is assigned to a first datum in this regard by means of a memory address or a unique identifier (UID), e.g., by storing the first datum together with the memory address or the unique identifier of the second datum together in a data record.

Within the context of embodiments of the invention, "provide", in particular in regard to data and/or information, can be understood to mean for example computer-aided provision. Provision is effected for example via an interface (e.g. a database interface, a network interface, an interface to a memory unit). This interface can be used for example to convey and/or send and/or retrieve and/or receive applicable data and/or information during the provision.

Within the context of embodiments of the invention, "provision" can also be understood to mean for example loading or storing, for example of a transaction containing applicable data. This can, by way of example, be effected on or by a memory module. "Provision" can also be understood to mean for example transmitting (or sending or conveying) of applicable data from one node to another node of the blockchain or of the distributed database system (or the infrastructure thereof) .

Within the context of embodiments of the invention, "smart contract process" can be understood to mean in particular an execution of a program code (e.g., of the control instructions) in a process by the distributed database system or the infrastructure thereof.

Within the context of embodiments of the invention, "transaction" or "transactions" can be understood to mean for example a smart contract, a data structure or a transaction data record that, in particular, each comprise one of the transactions or multiple transactions. Within the context of embodiments of the invention, "transaction" or "transactions" can also be understood to mean for example the data of a transaction of a data block of a blockchain. A transaction can in particular comprise a program code that provides a smart contract, for example. By way of example, within the context of embodiments of the invention, a transaction can also be understood to mean a control transaction and/or confirmation transaction. Alternatively, a transaction can, by way of example, be a data structure that stores data (e.g. the control instructions). A transaction can in particular comprise a program code that provides a smart contract, for example.

Within the context of embodiments of the invention, a "program code" (e.g., a smart contract) can be understood to mean for example a program instruction or multiple program instructions, in particular stored in one or more transactions. The program code is in particular executable and is executed by the distributed database system, for example. This can be realized by means of an execution environment (e.g., a virtual machine), for example, the execution environment or the program code preferably being Turing complete. The program code is preferably executed by the infrastructure of the distributed database system. This involves for example a virtual machine being realized by the infrastructure of the distributed database system.

Within the context of embodiments of the invention, a "smart contract" can be understood to mean for example an executable program code (see in particular the "program code" definition). The smart contract is preferably stored in a transaction of a distributed database system (e.g., a blockchain), for example in a data block of the distributed database system. By way of example, the smart contract can be executed in the same way as explained in the definition of "program code", in particular within the context of embodiments of the invention.

Within the context of embodiments of the invention, a "distributed database system", which, by way of example, can also be referred to as a distributed database, can be understood to mean for example a locally distributed database, a blockchain, a distributed ledger, a distributed memory system, a distributed ledger technology (DLT) based system (DLTS), a revision-proof database system, a cloud, a cloud service, a blockchain in a cloud or a peer-to-peer database. It is also possible, by way of example, for different implementations of a blockchain or DLTS to be used, such as, e.g., a blockchain or DLTS that is implemented by means of a directed acyclic graph (DAG), a cryptographic puzzle, a hash graph or a combination of the implementation variants. It is also possible, by way of example, for different consensus methods (consensus algorithms) to be implemented. These can be for example a consensus method by means of a cryptographic puzzle, gossip about gossip, virtual voting or a combination of the methods (e.g., gossip about gossip in combination with virtual voting). If a blockchain is used, for example, then it can be implemented in particular by means of a Bitcoin-based implementation or an Ethereum-based implementation.

A "distributed database system" can also be understood to mean for example a distributed database system that has at least some of its nodes and/or devices and/or infrastructure implemented by a cloud. By way of example, the applicable components are implemented as nodes/devices in the cloud (e.g., as virtual nodes in a virtual machine).

A distributed database system can also be a distributed communication system for data interchange or a peer-2-peer communication system or a peer-2-peer application, for example. This can be a network or a peer-2-peer network, for example. A/the distributed database system can also be a local distributed database system and/or a local distributed communication system, for example.

Within the context of embodiments of the invention, a "blockchain node", "node", "node of a distributed database system" and the like can be understood to mean for example devices (e.g., field devices), computers, smartphones, clients or subscribers that perform operations for (with) the distributed database system (e.g., a blockchain). Such nodes can, by way of example, execute transactions of a distributed database system or the data blocks thereof or insert or concatenate new data blocks with new transactions into the distributed database system by means of new data blocks.

Devices are for example devices of a technical system and/or industrial installation and/or of an automation network and/or of a production installation that are in particular also a node of the distributed database system. The devices in this instance can be for example field devices or devices of the Internet of Things that are in particular also a node of the distributed database system. Nodes can, by way of example, also comprise at least one processor, e.g., in order to perform their computer-implemented functionality.

It is an advantage of the invention that it provides an access recovery mechanism to regain access to the device, e.g., a wallet. Access authorisation, e.g., in case of a lost password, is controlled by multiple nodes of the distributed database system, hence, enabling secure and decentralized access recovery. A user or application can be authorised to access the device, e.g., for recovering access to a private key stored on the device. To this end, if access is authorised, the access credential can be reset by the user or the application.

Assets assigned to the device can therefore be recoverable, even if the user/owner of the device forgets the password and/or loses the private key stored in the device. This is a big advantage given cryptographic wallets with lost keys are a huge issue.

The recovery is not controlled via a centralized mechanism but is preferably driven by a set of custodial nodes and a consensus driven approach. Therefore, a user does not have to remember a recovery pass phrase or to trust a centralized organization.

The authorisation process can be furthermore recorded and therefore stored on the distributed database, e.g., tracked on the blockchain.

According to a preferred embodiment of the method, access to the device can be authorised if a majority of check results is positive.

The recovery can be consensus-based. Only if a majority of custodial nodes provide a positive verification of the second in put data, the access recovery is initiated.

According to an alternative embodiment of the method, access to the device can be authorised if a predefined subset of check results is positive.

According to a preferred embodiment of the method, the method can further comprise the steps:
- setting a new access password for accessing the device,
- setting new first output and related first input data if access is authorized,
   and
- method steps b) to c) are repeated using these new first output and first input data.

After access is authorized, new authorization output and input data can be set for a subsequent access recovery. Furthermore, a new access password or new public key for accessing the device can be set.

According to a further embodiment of the method, the method can further comprise the steps:
- setting an email-address by the user or the application,
- encrypting the email-address using the cryptographic public keys,
- sending an email to the email-address by the nodes when access is requested, wherein the email-address is decrypted by the nodes using respective cryptographic private keys of the nodes, and wherein the email comprises an identification request for the user or the application.

This can add an additional security layer for the access recovery.

According to a preferred embodiment of the method, the first input data and/or second input data can be specified by the first output data.

Preferably, the first output data specify the data content and/or data of the first and/or second input data. In other words, the first input data can be dependent on the first output data.

According to a further embodiment of the method, the first output data can be at least one recovery question and the first input data and/or the second input data can be a related answer to the at least one recovery question.

For example, the first output data can be provided to a user/owner of the device, such that the user is prompted to provide input data according to the specification of the first output data.

According to a further embodiment of the method, the predefined number of nodes can be defined before setting the first output data and the first input data.

Preferably, the user/owner of the device can preset the number of nodes for access authorization. To this end, a certain level of security can be chosen by the user.

According to a further embodiment of the method the nodes can be randomly selected from a plurality of nodes of the distributed database system.

A random selection of the nodes provides an additional level of security. Preferably, the selected nodes are not notified that they are selected as custodians of this device. This maintains randomness and reduces the probability of custodians colluding.

According to a further embodiment of the method the first output data and/or the first input data can be set by a user or an application.

Preferably, the first output data and related first input data can be specified by the user/owner of the device, e.g., based on personal data. Therefore, remembering the first/second input data in order to recover access to the device is facilitated.

According to a further embodiment of the method, the device can be a digital wallet, e.g., a cryptocurrency wallet.

According to a further embodiment of the method the distributed database system can be a blockchain or a distributed ledger.

To this end, the device is preferably connected to and/or is part of the distributed database system, such that the device can exchange data with the distributed database system.

In addition, a computer program product (non-transitory computer readable storage medium having instructions, which when executed by a processor, perform actions) having program instructions/software code portions for performing the aforementioned methods according to embodiments of the invention is claimed, wherein one of the methods according to embodiments of the invention, all of the methods according to embodiments of the invention or a combination of the methods according to embodiments of the invention is performable by means of the computer program product each time.

The invention will be explained in more detail by reference to the accompanying figures.
Fig. 1: shows a first exemplary embodiment of the invention;
Fig. 2: shows a second exemplary embodiment of the invention; and
Fig. 3: shows a third exemplary embodiment of the invention.

Equivalent parts in the different figures are labeled with the same reference signs.

Moreover, in particular a (relevant) person skilled in the art, with knowledge of the method claim/method claims, is of course aware of all routine options for realizing products or options for implementation in the conventional art, and so there is no need in particular for independent disclosure in the description. In particular, these customary realization variants known to a person skilled in the art can be realized exclusively by hardware (components) or exclusively by software (components). Alternatively, and/or additionally, a person skilled in the art, within the scope of his/her expert ability, can choose to the greatest possible extent arbitrary combinations according to embodiments of the invention of hardware (components) and software (components) in order to implement realization variants according to embodiments of the invention.

A combination according to embodiments of the invention of hardware (components) and software (components) can occur in particular if one portion of the effects according to embodiments of the invention is brought about preferably exclusively by special hardware (e.g., a processor in the form of an ASIC or FPGA) and/or another portion by the (processor- and/or memory-aided) software.

In particular, in view of the high number of different realization options, it is impossible and also not helpful or necessary for the understanding of embodiments of the invention to name all these realization options. In this respect, in particular all the exemplary embodiments below are intended to demonstrate merely by way of example a few ways in which in particular such realizations of the teaching according to embodiments of the invention could be manifested.

Consequently, in particular the features of the individual exemplary embodiments are not restricted to the respective exemplary embodiment, but rather relate in particular to embodiments of the invention in general. Accordingly, features of one exemplary embodiment can preferably also serve as features for another exemplary embodiment, in particular without this having to be explicitly stated in the respective exemplary embodiment.

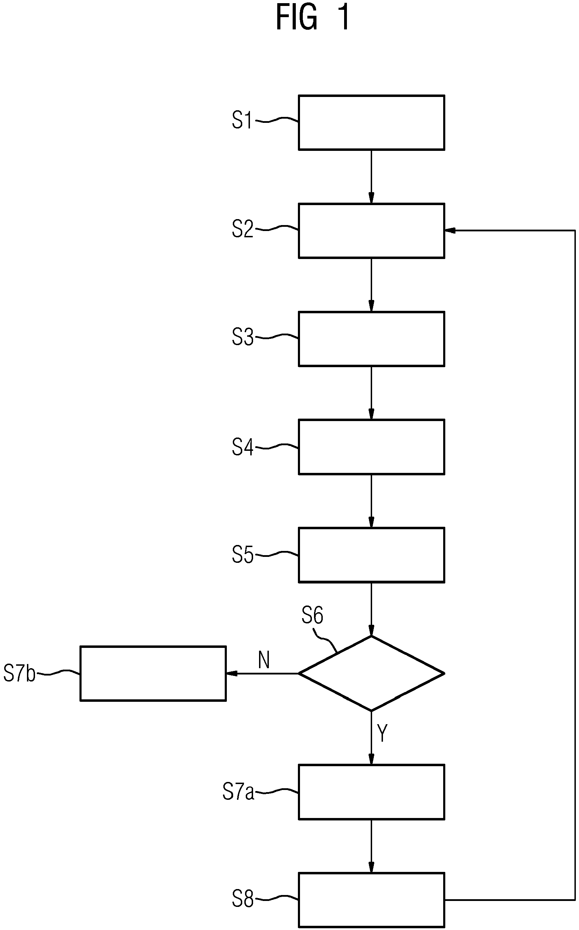

Fig. 1 shows a flow chart illustrating method steps according to a first exemplary embodiment of the invention.

The method can be for example executed on at least one computer. Preferably, the method can be performed by executing a program code, e.g., a smart contract. In other words, the method can be realized by at least one smart contract.

The method enables authorising access to a device, wherein the access authorization and subsequent recovery is managed by nodes of a distributed database system. The device can be a node of the distributed database system. In particular, the method allows for recovering access to a device in case of lost, forgotten, missing and/or wrong access data for accessing the device, e.g., login information or password. A device can be for example a wallet, which is connected to a distributed database system, e.g., a blockchain. The device can also be a field device, an IoT-device, a communication device, etc..

For example, the device can be a cryptocurrency wallet. The owner and/or the application can access the device using a password or cryptographic key. The application can for example be configured to access the device using an access password. If the owner of the cryptocurrency wallet lost his/her password for accessing the wallet or if the application cannot provide the correct password, the wallet (and stored assets therein, e.g., private keys) cannot be accessed anymore. The following method steps provide access recovery.

In the first step S1, first output data and related first input data for accessing the wallet are set, e.g., by the owner and/or by an application. Preferably, the first output data and related first input data are set when creating the wallet. For example, this can be defined in a wallet smart contract.

The first input data depend in particular on the first output data, i.e., the first output data can for example specify which first input data are required. The first output data can be for example at least one recovery question specified by the owner of the wallet. The first input data can then be the related answers to these recovery questions.

In the next step S2, cryptographic public keys are retrieved from a predefined number of nodes of the distributed database system. These nodes are preferably randomly selected. The number of nodes can be for example set by the owner of the wallet. Based on the defined number, random nodes of the distributed database system are selected as custodial nodes. The selection can for example be registered in the distributed database. Cryptographic public keys of each of the selected nodes are provided.

Preferably, the custodial nodes not notified of the fact that they are selected as custodians of the wallet. To this end, the selection and key transfer can be performed via a smart contract, also referred to as recovery smart contract, executed on the distributed database ensuring randomness.

In the next step, the first input data are encrypted using the cryptographic public keys. For example, each answer to one of the questions is encrypted using a different public key. Alternatively or in addition, an answer can be encrypted using more than one public key. Preferably, a part of an answer to be encrypted with a given public key is randomly selected or a key is randomly selected out of a variety of public keys to encrypt a given answer. The encrypted input data is then assigned to the respective nodes. In other words, encrypted input data which is encrypted using a public key of a particular node is assigned to said node.

The encrypted first input data can therefore only be decrypted by a respective node using its respective private key.

In addition an email-address can be set by the user or the application for access recovery. The email-address can also be encrypted using the public keys of the selected custodial nodes. In case of access authorisation is requested, an email is sent to the email-address by the custodial nodes, wherein the email-address is decrypted by the nodes using respective cryptographic private keys of the nodes. The email comprises for example at least an identification request for the user or the application, i.e., the user or the application is then required to provide a proof of identity in order to regain access to the device.

Preferably, the method steps S1 to S3 are performed when creating the wallet. To this end, the first output and first input data are set for a later access recovery in case the primary access to the device is not possible, e.g., if the owner lost his/her password.

In the next step S4, an access request for accessing the device by a user or an application is received. For example, if a user/owner of the device has lost his/her password to access the device and/or an application cannot provide correct credentials, an access request for accessing the device can be triggered. For example, the user or the application can trigger the recovery method, e.g., by executing the recovery smart contract.

In the next step S5, as a result of the access request, the first output data can be provided, e.g., shown, or prompted, or sent, etc., to the user or the application and input data depending on the first output data can be requested from the user or the application. Second input data can then be provided by the user or the application. For example, the recovery questions can be provided to the user and he/she can provide corresponding answers.

To this end, a ping with the address of the device can be sent to the custodial nodes by the recovery smart contract, such that the custodial nodes in turn can read the first output data from the device and request correct second input data from the user. The user pings the individual custodial nodes for recovery.

In the next step S6 the second input data is checked against the first input data by the nodes. To this end, the first input data are decrypted by the custodial nodes using respective cryptographic private keys of the respective nodes. The nodes can therefore check whether the provided second input data match the defined first input data.

In the next step, access to the wallet is authorised depending on the check results. If the check results are positive, branch Y, then access is authorized and hence access can be recovered, i.e., the owner/application can use the wallet again. Preferably, if a majority of check results is positive, i.e., the second input data match the first input data, access is authorised. Alternatively, if at least a predefined number of check result is positive, access is authorised. If the check results are negative, branch N, access recovery is denied.

In the next step S8, if access to the wallet is authorised, the user or the application can recover access to the wallet, i.e., a new public key or a password is provided by the user or the application for accessing the wallet, and also new first output and related first input data can be set and at least step S2 to S3 can be repeated. If a further access recovery is triggered, also steps S4 to S7 can be repeated.

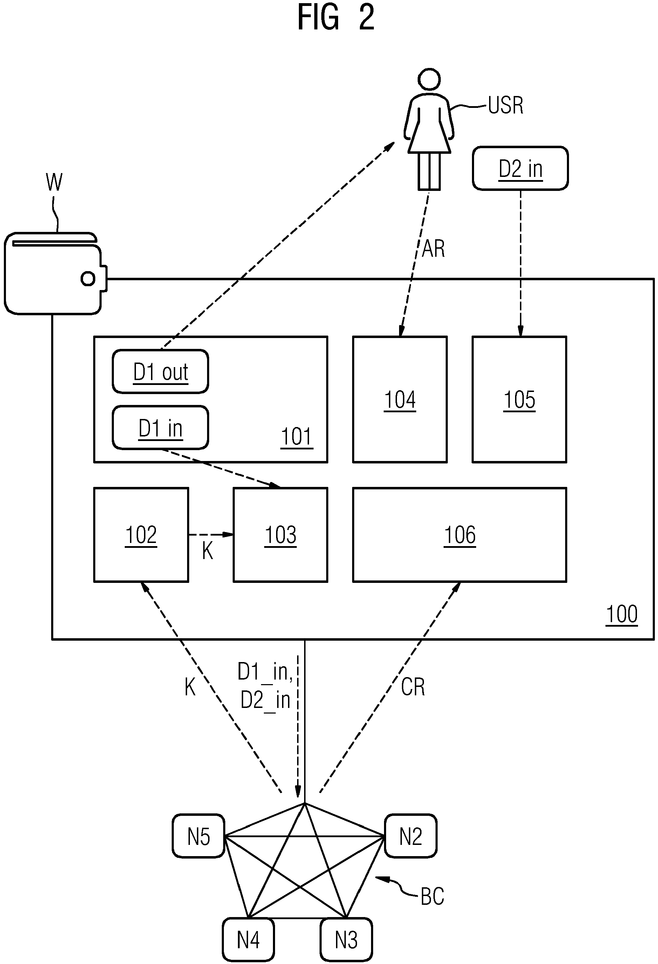

Figure 2 shows schematically an exemplary embodiment of the apparatus 100 for authorising and recovering access to a device W, e.g., a wallet. The wallet W is preferably connected to a distributed database system BC, e.g., a blockchain network, which comprises a plurality of nodes N1, ..., N5.

The apparatus 100 is preferably part of the wallet W. The apparatus comprises a data module 101, a first interface 102, an encryption module 103, a second interface 104, a third interface 105, and an authorization module. These modules and interface can at least partly be implemented in software. The modules and interfaces of the apparatus 100 are preferably interconnected such that they can exchange data.

The apparatus 100 is configured to recover access to the wallet W, e.g., if an owner USR of the wallet has lost access to it.

The data module 101 is configured to set first output data D1_out and related first input data D1_in for accessing the wallet. For example, the owner USR of the wallet W provides a set of recovery questions D1_out and related answers D1_in, which can be stored therein.

The first interface 102 is configured to retrieve cryptographic public keys K from a predefined number of nodes of the distributed database system. Preferably, the predefined number is set by the owner USR when creating the wallet W and therefore configuring the apparatus 100. The cryptographic keys K have for example been created using an asymmetric encryption method.

The encryption module 103 is configured to encrypt the first input data using the cryptographic public keys K. For example, node N1 can provide its public key K to encrypt at least part of the first input data D1_in. This part of the encrypted first input data D1_in is then assigned to said node N1 and only said node N1 can decrypt this encrypted part of the input data D1_in.

The second interface 104 is configured to receive an access or authorisation request AR for accessing the wallet W by the owner USR, e.g., if he/she lost access to the wallet W. For example, the owner of the wallet USR can trigger the access recovery. The access recovery can be for example be controlled via a smart contract executed by the nodes of the distributed database.

The third interface 105 is configured to receive second input data D2_in from the owner USR depending on the first output data as a result of the access request AR. To this end, as a result of the access request AR, the first output data D1_out are provided, e.g., sent, to the owner USR such that the owner USR is invited to provide second input data D2 in. For example, a set of recovery questions is provided to the owner USR, which he/she is required to answer correctly in order to recover access to the wallet W.

The authorising module 106 is configured to authorise access to the device for the owner USR depending on check results CR, wherein the check results CR are provided by the nodes checking the second input data D2_in against the first input data D1_in, wherein the first input data are decrypted using respective cryptographic private keys of the respective nodes. The nodes can decrypt the initially set first input data D1_in using their corrsponding private keys. Then, the provided second input data D2_in can be compared to the first input data D1_in by the nodes. Depending on this comparison, access to the wallet can be authorized and access recovery can be initiated. For example, if a majority of nodes provides a positive check result, the access can be recovered. In that case, a new public-private key pair for the owner USR can be set for recovering the assets assigned to the wallet W.

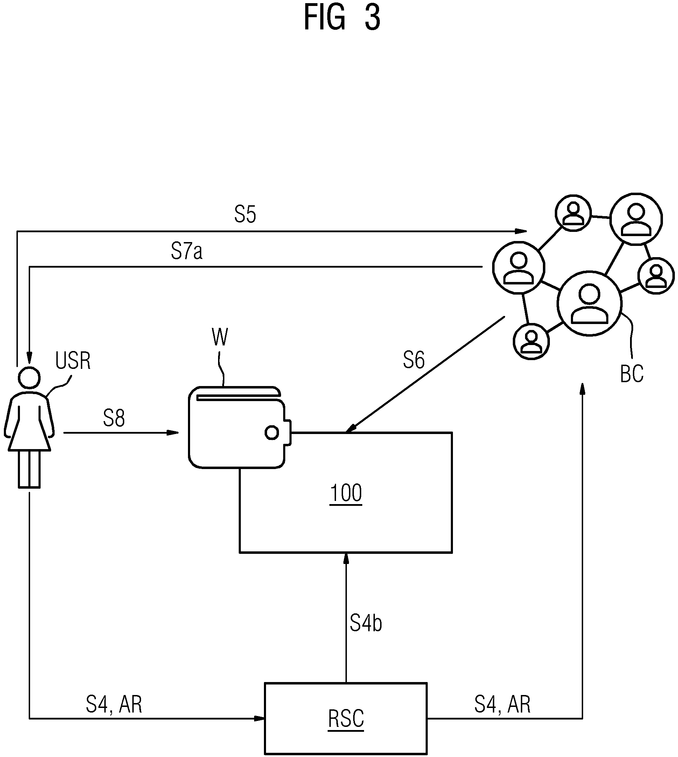

Figure 3 shows another exemplary embodiment of the invention. It schematically illustrates the method steps involved in authorising access to a wallet if the wallet access needs to be recovered. The wallet is connected to a blockchain network BC comprising a number of nodes. Preferably, the access recovery process comprises first creation of identity and wallet, second recovery of account and third reassigning the account to the owner.

The wallet recovery is supported by a predefined number of randomly selected nodes of the blockchain network BC, also referred to as custodial or recovery nodes. To this end, a smart contract, also referred to as the recovery smart contract RSC, is executed by the nodes of the blockchain network BC. If new nodes join the network, these can be registered as potential recovery nodes, i.e., identifiers and public keys of these nodes are registered with the recovery smart contract RSC. If nodes support access recovery, they can for example receive a token.

The identity and wallet creation comprises setting a wallet smart contract 100 as part of the wallet W. The wallet smart contract comprises the owner's public key, the number and address of the selected custodial nodes, the recovery questions and corresponding answers.

The default wallet smart contract contains an empty list of nodes which will be populated at the time of creation of wallet W. When a user USR initiates creation of the wallet, he/she provides an initial number, n, which designates the number of requested nodes for access recovery. Based on the input, n random nodes out of recovery nodes are picked and added as custodians in the recovery smart contract. Hence, it is stored on the blockchain which nodes of the network are assigned for access recovery of this wallet W. Preferably, these selected nodes are not notified of the fact that they are chosen as custodians of this wallet W. This maintains randomness and makes the probability of custodians colluding very low.

The user USR of the wallet answers a set of security questions for access recovery. Then, the public keys of the selected nodes are picked from the database, and the provided answers are encrypted using those public keys. The encrypted answers are stored in the wallet smart contract 100. These encrypted answers can only be decrypted by the individual custodian nodes using their private keys.

The user's provided public key is set as the owner of the wallet smart contract and wallet W is set to active and the wallet is registered at the recovery smart contract.

If the user USR lost access to the wallet W, he/she can trigger the recovery process by sending an access request AR, S4, to the network triggering the recovery smart contract RSC. The recovery smart contract can read the list of selected recovery nodes, S4b, which have been set in the wallet. These selected recovery nodes can be notified, e.g., the recovery smart contract pings these selected nodes in order to start the access recovery process.

The recovery nodes can read the recovery questions and request correct answers from the user USR, step S5. Since the original answers to the questions are encrypted by the public keys of these nodes, these nodes can decrypt the corresponding answer using their private keys. The nodes can then verify S6 the provided answer from the user by comparing them to the original answers. If the user USR answers at least a majority of the recovery questions correctly, S7a, the identity recovery can be triggered. If n selected nodes return a positive check results, the recovery is initiated, S8. To this end, the user USR provides a new public key which replaces the previous owner public key for accessing the wallet W, and the user USR can access the wallet W again.

A new random set of recovery nodes can then be selected, and new recovery questions and related answers can be set for a subsequent access recovery.

In another implementation, an additional step of verification can be added via the recovery process. The owner can store an email address for recovery in the wallet encrypted by m out of n keys from recovery nodes. The recovery nodes can trigger the recovery email, which talks to an external oracle and send a form of identification for the user. This adds an additional layer of security where other than the security questions, the identity of user is also verified via a predefined email address.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

## Claims

1. Computer-implemented method for authorising access to a device (W), wherein the device (W) is connected to a distributed database system (BC), the method comprising the steps:
a) setting (S1) first output data (D1_out) and related first input data (D1_in) for accessing the device,
b) retrieving (S2) cryptographic public keys (K) from a predefined number of nodes of the distributed database system,
c) encrypting (S3) the first input data (D1_in) using the cryptographic public keys,
d) receiving (S4) an access request for accessing the device by a user or an application,
e) receiving (S5) second input data (D2_in) from the user or the application as a result of the access request, wherein the second input data depend on the first output data (D1_out),
f) checking (S6) the second input data (D2_in) against the first input data (D1_in) by the nodes, wherein the first input data (D1_in) are decrypted using respective cryptographic private keys of the respective nodes,
and
g) authorising (S7a, S7b) access to the device for the user or the application depending on the check results (CR).

2. Computer-implemented method according to claim 1 wherein access to the device is authorised (S7a) if a majority of check results (CR) is positive.

3. Computer-implemented method according to claim 1 wherein access to the device is authorised (S7a) if a predefined subset of check results (CR) is positive.

4. Computer-implemented method according to one of the preceding claims further comprising the steps:
- setting a new access password for accessing the device,
- setting new first output and related first input data if access is authorised (S8),
and
- method steps b) to c) are repeated using these new first output and first input data.

5. Computer-implemented method according to one of the preceding claims further comprising the steps:
- setting an email-address by the user or the application,
- encrypting the email-address using the cryptographic public keys,
- sending an email to the email-address by the nodes when access is requested, wherein the email-address is decrypted by the nodes using respective cryptographic private keys of the nodes, and wherein the email comprises an identification request for the user or the application.

6. Computer-implemented method according to one of the preceding claims wherein the first input data and/or second input data is specified by the first output data.

7. Computer-implemented method according to one of the preceding claims wherein the first output data is at least one recovery question and the first input data and/or the second input data is a related answer to the at least one recovery question.

8. Computer-implemented method according one of the preceding claims wherein the predefined number of nodes is defined before setting the first output data and the first input data.

9. Computer-implemented method according one of the preceding claims wherein the nodes are randomly selected from a plurality of nodes of the distributed database system.

10. Computer-implemented method according to one of the preceding claims wherein the first output data and/or the first input data is set by a user or an application.

11. Computer-implemented method according to one of the preceding claims wherein the device is a digital wallet.

12. Computer-implemented method according one of the preceding claims wherein the distributed database system is a blockchain or a distributed ledger.

13. Apparatus (100) for authorising access to a device (W), wherein the device is connected to a distributed database system, the apparatus comprising:
- a data module (101) which is configured to set first output data and related first input data for accessing the device,
- a first interface (102) which is configured to retrieve cryptographic public keys from a predefined number of nodes of the distributed database system,
- an encryption module (103) which is configured to encrypt the first input data using the cryptographic public keys,
- a second interface (104) which is configured to receive an access request for accessing the device by a user or an application,
- a third interface (105) which is configured to receive second input (D2_in) data from the user or the application as a result of the access request, wherein the second input data depend on the first output data,
and
- an authorising module (106) which is configured to authorise access to the device for the user or the application depending on check results (CR), wherein the check results are provided by the nodes checking the second input data against the first input data, wherein the first input data are decrypted using respective cryptographic private keys of the respective nodes.

14. Computer program product directly loadable into the internal memory of a digital computer, comprising software code portions for performing the method steps of one of the claims 1 to 11 when said computer program product is run on a computer.
